# FASCICULE DE BREVET EUROPEEN

(11) **EP 1 499 194 B1**
(45) Date de publication et mention de la délivrance du brevet: **21.06.2006**
(21) Numéro de dépôt: 03747472.3
(22) Date de dépôt: 29.04.2003
(51) Int. Cl.: A01N 65/00, A01N 57/12

(54) **COMPOSITION FONGICIDE COMPRENANT UN COMPOSE POTENTIALISATEUR, UN ELICITEUR DE LA DEFENSE DES PLANTES ET UN COMPOSE FONGICIDE**
FUNGIZIDE ZUSAMMENSETZUNG, DIE EINE WIRKUNGSVERSTÄRKENDE VERBINDUNG, EIN PFLANZENAKTVIERENDES MIKROBIZID UND EINE FUNGIZIDE VERBINDUNG ENTHÄLT
FUNGICIDAL COMPOSITION COMPRISING A POTENTIATING COMPOUND, A PLANT ACTIVATING MICROBICIDE AND A FUNGICIDAL COMPOUND

(30) Priorité: 30.04.2002 EP 02356080
(43) Date de publication de la demande: 26.01.2005
(73) Titulaire: Bayer CropScience S.A., 69009 Lyon (FR)
(72) Inventeur: LABOURDETTE, Gilbert, F-71600 PARAY LE MONIAL (FR); LATORSE, Marie-Pascale, F-69490 Saint-Romain de Popey (FR)
(74) Mandataire: Nowak, Alexander
(86) Numéro de dépôt international: PCT/FR2003/001340
(87) Numéro de publication internationale: WO 2003/092384

(56) Documents cités:
- WO-A-00/36916
- WO-A-02/05650
- WO-A-97/03563
- WO-A-98/29537
- WO-A-98/46078
- WO-A-99/29175
- WO-A-99/53761
- US-B1- 6 335 355
- DATABASE CA [en ligne] CHEMICAL ABSTRACTS SERVICE, COLUMBUS, OHIO, US; CHAZALET, M. ET AL: "Results of experiments using ethyl phosphites against various vine diseases" retrieved from STN Database accession no. 88:184442 XP002212496 & PHYTIATR.-PHYTOPHARM. (1977), 26(1), 41-54,
- DATABASE CA [en ligne] CHEMICAL ABSTRACTS SERVICE, COLUMBUS, OHIO, US; BUGARET, YVON ET AL: "Efficacy in the vineyard of several fenamidone based combination against downy mildew" retrieved from STN Database accession no. 134:262241 XP002212497 & PHYTOMA (2001), 535, 28-30,32,
- KUMIAI CHEM IND: "Agricultural antimicrobial compsns. for treating powdery mildew etc. - contain 2-anilino-4-methyl-pyrimidine deriv. and e.g. 2,6-dichloro-4-nitro-aniline" WPI WORLD PATENT INFORMATION DERWENT, DERWENT, GB, XP002201203 & JP 05 112408 A 7 mai 1993 (1993-05-07)
- COLBY S.R.: 'Calculating synergistic and antagonistic responses of herbicide combinations' WEEDS vol. 15, 1967, WEED SOCIETY OF AMERICA, URBANA, IL, US, pages 20 - 22, XP001112961

## Description

La présente invention a pour objet une nouvelle composition fongicide comprenant au moins un composé potentialisateur, un composé éliciteur de la défense des plantes et un composé fongicide, ainsi qu'une méthode de traitement des plantes contre les maladies phytopathogènes utilisant cette composition.

La demande de brevet WO 97/01277 divulgue des compositions fongicides synergiques à base d'acibenzolar-S-methyl (ou dérivés) et d'un composé fongicide choisi dans une liste limitée de composés. Cette composition est décrite comme agissant à la fois comme agent activant la défense des plantes mais aussi par action directe sur le champignon. L'acide phosphoreux où l'un de ses dérivés n'y sont pas mentionnés.

La demande de brevet WO 98/46078 divulgue la combinaison de deux méthodes de contrôle des maladies phytopathogènes : une méthode directe d'attaque du champignon lui-même et une méthode d'activation de la défense naturelle des plantes. Cette combinaison d'effets est obtenue par le mélange de l'acide DL-3-aminobutyrique ou l'un de ses dérivés N-benzoyl-octyl ester avec un ou plusieurs composés fongicides, parmi lesquels le fosetyl-A1 est cité. Les compositions divulguées dans ce document sont des compositions binaires.

La demande de brevet WO 98/29537 mentionne un effet synergique sur la résistance de la plante aux maladies obtenu par l'application d'un microbicide sur une plante dite 'SAR-on' (ou 'Systemic Acquired Resistance-on'), une telle plante pouvant entre autre être obtenue par l'application d'un éliciteur (ou 'plant activating microbiocide'). Cette demande de brevet divulgue donc une méthode de protection des plantes par application d'éliciteurs (ou 'plant activating microbicide') tels que le benzo(1,2,3)thidiazole-7-carbothioic acid S-methyl ester également appelé BTH, l'acide 2,6-dichloroisonicotinique également appelé INA, acide salycilique également appelé SA et d'un microbicide 'conventionnel' dont le fosetyl-A1. Les mélanges selon notre invention ne sont pas divulgués.

La demande de brevet WO 99/53761 décrit le rôle de potentialisateur (amplificateur) joué par le fosetyl-Al lorsqu'il est associé à un éliciteur de la défense des plantes, ainsi que des compositions fongicides synergiques associées à cette invention. Seules des compositions binaires y sont mentionnées.

Les compositions fongicides divulguées dans les documents cités ci-dessus visent à améliorer l'activité du composé fongicide pour le traitement de maladies sur lesquelles il est déjà connu comme étant suffisamment efficace pour être utilisable par l'agriculteur. Or, il est toujours souhaitable en agriculture d'améliorer le spectre d'activité d'un fongicide en l'étendant à des maladies pour lesquelles son activité ne permettait pas son utilisation par l'agriculteur.

Il a maintenant été trouvé que les compositions selon l'invention permettent, de manière tout à fait surprenante, d'étendre le spectre d'activité des fongicides à des maladies pour lesquelles leur activité ne permettait pas leur utilisation par l'agriculteur. En effet, il a été trouvé que les compositions comprenant au moins un composé potentialisateur et au moins un composé éliciteur de la défense naturelle des plantes permettaient d'améliorer l'activité des fongicides auxquels ils étaient adjoints, et qu'elles permettaient l'utilisation par l'agriculteur desdits fongicides pour traiter des maladies phytopathogènes sur lesquelles leur activité propre est insuffisante.

La présente invention a pour objet une composition fongicide comprenant au moins :
- un composé A potentialisateur choisi parmi l'acide phosphoreux, ses sels alcalins
ou alcalino-terreux et ses dérivés ;
- un composé B éliciteur de la défense des plantes choisi dans la liste constituée des protéines, des oligosaccharides, des polysaccharides, des lipides, des glycolipides, des glycoprotéines, des peptides, des extraits de parois issus de matériel végétal et/ou de champignons, des champignons, de l'acibenzolar-S-methyl ou l'un de ses analogues, de l'acide 2,6-dichloroisonicotinique (également appelé INA), de l'acide β-aminobutyrique (également appelé BABA), des extraits de levure, de l'acide salicylique ou l'un de ses esters, de l'acide jasmonique ou l'un de ses esters, d'un extrait d'algues ; et
- un composé C fongicide choisi parmi la liste de composés comprenant les composés susceptibles d'inhiber le transport des électrons de la chaîne respiratoire de l'ubiquinol:ferricytochrome-c oxydoréductase mitochondrial des organismes fongiques phytopathogènes, les composés susceptibles d'inhiber la biosynthèse de l'ergostérol, les composés susceptibles d'inhiber la biosynthèse de la mélanine, les composés susceptibles d'inhiber la biosynthèse de la méthionine et les composés susceptibles d'inhiber la germination des spores en agissant sur plusieurs voies métaboliques.

On entend par le terme 'potentialisateur', dans le cadre de la présente invention, tout composé susceptible d'amplifier la réaction naturelle de défense d'une plante déclenchée par un éliciteur.

Les composés susceptibles d'inhiber le transport des électrons de la chaîne respiratoire de l'ubiquinol:ferricytochrome-c oxydoréductase mitochondrial des organismes fongiques phytopathogènes sont également appelés inhibiteurs du complexe III dans le cadre de la présente invention.

Les composés susceptibles d'inhiber la germination des spores en agissant sur plusieurs voies métaboliques sont également appelés inhibiteurs multi-sites de la germination des spores dans le cadre de la présente invention.

Le composé potentialisateur A de la présente invention est choisi parmi l'acide phosphoreux, ses sels alcalins ou alcalino-terreux et ses dérivés.

Comme composé potentialisateur A, on préfère l'acide phosphoreux ou certains de ses dérivés tels que les phosphites métalliques. Parmi les phosphites métalliques, on préfère encore le fosetyl-A1 et le fosetyl-Na.

Le composé éliciteur de la défense des plantes B de la présente invention est choisi dans la liste comprenant des protéines, des oligosaccharides, des polysaccharides, des lipides, des glycolipides, des glycoprotéines, des peptides, des extraits de parois issus de matériel végétal et/ou de champignons, des champignons, l'acibenzolar-S-methyl ou l'un de ses analogues, des extraits de levure, de l'acide salicylique ou l'un de ses esters, un extrait d'algues.

Comme composé B éliciteur, on préfère les composés polysaccharidiques. Un composé encore préféré est le produit Elexa^{™}.

Les composés oligosaccharides sont également des composés préférentiellement choisis comme éliciteurs B. Parmi ces composés, la laminarine est encore préférée.

Les extraits d'algues sont également des composés préférentiellement choisis comme composés éliciteurs B. Parmi ces composés, des produits tels que le β1-3(1-6)glucane, Agrocean, Agrimer 540 et Agrotonic sont encore préférés.

Le composé fongicide C de la présente invention est choisi dans la liste de composés comprenant les composés susceptibles d'inhiber le transport des électrons de la chaîne respiratoire de l'ubiquinol:ferricytochrome-c oxydoréductase mitochondrial des organismes fongiques phytopathogènes, les composés susceptibles d'inhiber la biosynthèse de l'ergostérol, les composés susceptibles d'inhiber la biosynthèse de la mélanine, les composés susceptible d'inhiber la biosynthèse de la méthionine et les composés susceptibles d'inhiber la germination des spores en agissant sur plusieurs voies métaboliques.

Parmi les composés agissant comme inhibiteur du complexe III on préfère les composés appartenant à la famille des dérivés de la strobilurine ou encore la fenamidone ou la famoxadone. La fénamidone est particulièrement préférée dans le cadre de la présente invention.

Les composés appartenant à la famille des dérivés de la strobilurine sont également préférés dans le cadre de la présente invention. Parmi les composés appartenant à la famille des dérivés de la strobilurine, on peut citer à titre d'exemples non limitatifs l'azoxystrobin, la dimoxystrobin, la fluoxastrobin, le kresoxim-methyl, la metominostrobin, la trifloxystrobin, la pyraclostrobin et la picoxystrobin. Parmi ces composés, on préfère l'azoxystrobin ou la fluoxastrobin.

Parmi les composés agissant comme inhibiteurs de la biosynthèse de l'ergostérol, on préfère les composés appartenant à la famille des triazoles, à la famille des imidazoles ou la spiroxamine.

Parmi les composés appartenant à la famille des triazoles, on peut citer de manière préférentielle mais non limitative, l'azaconazole, le bitertanol, le bromuconazole, le cyproconazole, le difenoconazole, le diniconazole, l'epoxiconazole, le fenbuconazole, le fluquinconazole, le flusilazole, le flutriafol, l'hexaconazole, l'imibenconazole, l'ipconazole, le metconazole, le myclobutanil, le penconazole, le propiconazole, le prothioconazole, le tebuconazole, le tetraconazole, le triadimefon, le triadimenol, le triticonazole, le diclobutrazol, l'etaconazole, le fluotrimazole, le furconazole, le furconazole-cis, le triamiphos, le triazbutil. Parmi ces composés, on préfère le fluquinconazole, le prothioconazole ou le tebuconazole.

Parmi les composés agissant comme inhibiteurs de la biosynthèse de l'ergostérol, les composés appartenant à la famille des imidazoles sont également préférés. Parmi ces composés, on préfère le prochloraz.

Parmi les composés agissant comme inhibiteurs de la biosynthèse de la mélanine, on préfère la tricyclazole.

Parmi les composés agissant comme inhibiteurs de la biosynthèse de la méthionine, on préfère le pyrimethanil.

Parmi les composés agissant comme inhibiteurs multi-sites de la germination des spores, on préfère les composé appartenant à la famille des phthalimides (également appelés dicarboximides), le tolylfluanid ou la fenhexamid.

Parmi les composés appartenant à la famille des phthalimides, on préfère le captane, le folpel ou l'iprodione.

Les composés agissant comme inhibiteur du complexe III sont les composés C préférentiellement choisis dans le cadre de la présente invention.

De préférence, les composés A, B et C sont présents dans un ratio en poids A: B: C tel que ce ratio soit compris dans l'intervalle 0,1-20: 0,1-20: 1. Préférentiellement encore, les composés A,B et C sont présents dans un ratio en poids A : B : C compris dans l'intervalle 0,5-10 : 0,5-10: 1; les ratios des composés A et B étant susceptibles de varier indépendamment l'un de l'autre.

Parmi les compositions préférées selon l'invention, on peut citer à titre d'exemples non limitatifs, les compositions suivantes :

| Composition selon l'invention | Composé potentialisateur A | Composé éliciteur B | Composé fongicide C |
|---|---|---|---|
| 1 | Fosetyl-Al | Elexa^{™} | Azoxystrobin |
| 2 | Fosetyl-Al | Elexa^{™} | Fenamidone |
| 3 | Fosetyl-Al | Elexa^{™} | Folpel |
| 4 | Fosetyl-Al | Elexa^{™} | Trifloxystrobin |
| 5 | Fosetyl-Al | Elexa^{™} | Tebuconazole |
| 6 | Fosetyl-Al | Elexa^{™} | 2-butoxy-6-iodo-3-propyl-benzopyran-4-one |
| 7 | Fosetyl-Al | Elexa^{™} | Fluoxastrobin |
| 8 | Fosetyl-Al | Elexa^{™} | Prothioconazole |
| 9 | Fosetyl-A1 | Elexa^{™} | Fenhexamid |
| 10 | Fosetyl-A1 | Elexa^{™} | Spiroxamine |
| 11 | Fosetyl-A1 | Elexa^{™} | Fluquinconazole |
| 12 | Fosetyl-A1 | Elexa^{™} | Prochloraz |
| 13 | Fosetyl-Al | Elexa^{™} | Tolylfluanid |
| 14 | Fosetyl-Al | Elexa^{™} | Pyrimethanil |
| 15 | Fosetyl-Al | Elexa^{™} | Iprodione |
| 16 | Fosetyl-Al | Elexa^{™} | Tricyclazole |
| 17 | Fosetyl-Al | Agrimer 540 | Azoxystrobin |
| 18 | Fosetyl-A1 | Agrimer 540 | Fenamidone |
| 19 | Fosetyl-Al | Agrimer 540 | Folpel |
| 20 | Fosetyl-A1 | Agrimer 540 | Trifloxystrobin |
| 21 | Fosetyl-A1 | Agrimer 540 | Tebuconazole |
| 22 | Fosetyl-A1 | Agrimer 540 | 2-butoxy-6-iodo-3-propyl-benzopyran-4-one |
| 23 | Fosetyl-Al | Agrimer 540 | Fluoxastrobin |
| 24 | Fosetyl-Al | Agrimer 540 | Prothioconazole |
| 25 | Fosetyl-Al | Agrimer 540 | Fenhexamid |
| 26 | Fosetyl-A1 | Agrimer 540 | Spiroxamine |
| 27 | Fosetyl-Al | Agrimer 540 | Fluquinconazole |
| 28 | Fosetyl-Al | Agrimer 540 | Prochloraz |
| 29 | Fosetyl-A1 | Agrimer 540 | Tolylfluanid |
| 30 | Fosetyl-Al | Agrimer 540 | Pyrimethanil |
| 31 | Fosetyl-Al | Agrimer 540 | Iprodione |
| 32 | Fosetyl-A1 | Agrimer 540 | Tricyclazole |
| 33 | Fosetyl-Al | Agrotonic | Azoxystrobin |
| 34 | Fosetyl-A1 | Agrotonic | Fenamidone |
| 35 | Fosetyl-Al | Agrotonic | Folpel |
| 36 | Fosetyl-Al | Agrotonic | Trifloxystrobin |
| 37 | Fosetyl-Al | Agrotonic | Tebuconazole |
| 38 | Fosetyl-Al | Agrotonic | 2-butoxy-6-iodo-3-propyl-benzopyran-4-one |
| 39 | Fosetyl-Al | Agrotonic | Fluoxastrobin |
| 40 | Fosetyl-Al | Agrotonic | Prothioconazole |
| 41 | Fosetyl-Al | Agrotonic | Fenhexamid |
| 42 | Fosetyl-A1 | Agrotonic | Spiroxamine |
| 43 | Fosetyl-Al | Agrotonic | Fluquinconazole |
| 44 | Fosetyl-A1 | Agrotonic | Prochloraz |
| 45 | Fosetyl-A1 | Agrotonic | Tolylfluanid |
| 46 | Fosetyl-A1 | Agrotonic | Pyrimethanil |
| 47 | Fosetyl-A1 | Agrotonic | Iprodione |
| 48 | Fosetyl-A1 | Agrotonic | Tricyclazole |
| 49 | Fosetyl-A1 | Agrocean | Azoxystrobin |
| 50 | Fosetyl-A1 | Agrocean | Fenamidone |
| 51 | Fosetyl-A1 | Agrocean | Folpel |
| 52 | Fosetyl-Al | Agrocean | Trifloxystrobin |
| 53 | Fosetyl-Al | Agrocean | Tebuconazole |
| 54 | Fosetyl-A1 | Agrocean | 2-butoxy-6-iodo-3-propyl-benzopyran-4-one |
| 55 | Fosetyl-A1 | Agrocean | Fluoxastrobin |
| 56 | Fosetyl-Al | Agrocean | Prothioconazole |
| 57 | Fosetyl-A1 | Agrocean | Fenhexamid |
| 58 | Fosetyl-A1 | Agrocean | Spiroxamine |
| 59 | Fosetyl-A1 | Agrocean | Fluquinconazole |
| 60 | Fosetyl-Al | Agrocean | Prochloraz |
| 61 | Fosetyl-A1 | Agrocean | Tolylfluanid |
| 62 | Fosetyl-A1 | Agrocean | Pyrimethanil |
| 63 | Fosetyl-A1 | Agrocean | Iprodione |
| 64 | Fosetyl-A1 | Agrocean | Tricyclazole |

D'une façon générale, les compositions selon l'invention peuvent comprendre de 0,05 à 99% (en poids) de matière active, un ou plusieurs supports solides ou liquides et, éventuellement, un ou plusieurs agents tensio-actifs.

Par le terme "support", on désigne, dans le présent exposé, une matière organique ou minérale, naturelle ou synthétique, avec laquelle la matière active est combinée pour faciliter son application sur les parties de la plante. Ce support est donc généralement inerte et il doit être acceptable en agriculture. Le support peut être solide (argiles, silicates naturels ou synthétiques, silice, résines, cires, engrais solides) ou liquide (eau, alcools, notamment le butanol, solvants organiques, huiles minérales et végétales et leurs dérivés). Des mélanges de tels supports peuvent être également utilisés.

Par agent tensioactif, on entend, au sens de la présente invention, tout agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque la matière active et/ou le support inerte ne sont pas solubles dans l'eau et que l'agent vecteur de l'application est l'eau.

Les compositions selon l'invention peuvent prendre la forme d'assez nombreux types de formulations parmi lesquelles on peut citer les solutions huileuses, les concentrés émulsionnables, les poudres mouillables, les formulations fluides et notamment les suspensions aqueuses ou les émulsions aqueuses, les granulés, les poudres, les aérosols, les formulations fumigènes dont les formulations fumigènes auto combustibles ou les formulations fumigènes à réaction chimique, les formulations pour nébulisation notamment les formulations pour brumisation, les formulations à très bas volume, les pâtes, les émulsions, les suspensions concentrées, de même que d'éventuels mélanges, associations ou combinaisons de ces différentes formes.

La préparation des compositions selon la présente invention s'effectuera selon des moyens conventionnels et connus de l'homme du métier.

La présente invention a également pour objet une méthode de traitement à titre préventif ou curatif contre les maladies phytopathogènes des plantes au moyen d'une quantité efficace et non phytotoxique d'une composition selon la présente invention.

Par 'quantité efficace et non phytotoxique', on entend, au sens de la présente invention, une quantité de composition selon l'invention suffisante pour permettre le contrôle ou la destruction des champignons présents ou susceptibles d'apparaître sur les cultures, et n'entraînant pour lesdites cultures aucun symptôme notable de phytotoxicité. Une telle quantité est susceptible de varier dans de larges limites selon le champignon à combattre, le type de culture, les conditions climatiques, et les composés compris dans la composition fongicide selon l'invention. Cette quantité peut être déterminée par des essais systématiques au champ, à la portée de l'homme du métier.

Au sens de la présente invention, on entend par méthode de traitement des plantes toute application d'une composition selon l'invention par des moyens connus de l'homme de métier sur le sol où poussent ou où sont susceptibles de pousser les plantes, ainsi que le traitement des plantes elles-mêmes.

La méthode de traitement des plantes selon l'invention peut être mise en oeuvre pour le traitement du matériel de propagation, par exemple les graines, les tubercules et les rhizomes, ainsi que les semences, les semis ou les semis de repiquage, les plants ou les plants de repiquage.

Cette méthode peut également être mise en oeuvre pour le traitement des racines.

Cette méthode peut aussi être mise en oeuvre pour le traitement des parties aériennes des plantes, par exemple les troncs, les tiges, les feuilles, les fleurs et les fruits.

Parmi les végétaux pouvant être traités selon l'invention, on peut citer : le coton; le lin; la vigne; les cultures fruitières telles que *Rosaceae* (notamment les fruits à pépin comme les pommes et les poires, les fruits à noyaux comme les abricots, les amandes et les pêches), *Ribesioidae, Juglandaceae, Betulaceae , Anacardiaceae, Fagaceae , Moraceae, Oleaceae, Actinidaceae, Lauraceae , Musaceae* (notamment les bananiers et les plantins), *Rubiaceae, Theaceae, Sterculiceae , Rutaceae* (notamment les citrons, les oranges et les pamplemousses); les cultures légumières telles que *Solarzaceae* (notamment les tomates), *Liliaceae , Asteraceae* (notamment les laitues), *Umbelliferae, Cruciferae , Chenopodiaceae, Cucurbitaceae, Papilionaceae* (notamment les pois), *Rosaceae* (notamment les fraises); les grandes cultures telles que *Graminae* (notamment le maïs, les céréales comme le blé, le riz, l'orge et le triticale), *Asteraceae* (notamment le tournesol), *Cruciferae* (notamment le colza), *Papilionaceae* (notamment le soja), *Solanaceae* (notamment la pomme de terre), *Chenopodiaceae* (notamment la betterave); les cultures horticoles et forestières; ainsi que les homologues génétiquement modifiés de ces cultures.

On peut citer comme exemples non limitatifs de végétaux et de maladies pouvant toucher ces végétaux et susceptibles d'être traités par la méthode selon la présente invention :
- le blé, en ce qui concerne la lutte contre les maladies suivantes des semences : les fusarioses *(Microdochium nivale* et *Fusarium roseum),* les caries *(Tilletia caries, Tilletia controversa* ou *Tilletia indica),* la septoriose *(Septoria nodorum) ;* le charbon nu *(Ustilago tritici) ;*
- le blé, en ce qui concerne la lutte contre les maladies suivantes des parties aériennes de la plante : le piétin-verse *(Tapesia yallundae, Tapesia acuiformis),* le piétin-échaudage *(Gaeumannomyces graminis),* la fusariose du pied *(F. culmorum, F. graminearum),* la fusariose des épis *(F. culmorum, F. graminearum, Microdochium nivale),* le rhizoctone *(Rhizoctonia cerealis),* l'oïdium *(Erysiphe graminis forma specie tritici),* les rouilles *(Puccinia striiformis* et *Puccinia recondita)* et les septorioses *(Septoria tritici* et *Septoria nodorum),* l'helminthosporiose *(Drechslera tritici-repentis) ;*
- le blé et l'orge, en ce qui concerne la lutte contre les maladies bactériennes et virales, par exemple la jaunisse nanisante de l'orge ;
- l'orge, en ce qui concerne la lutte contre les maladies suivantes des semences : les helminthosporioses *(Pyrenophora graminea, Pyrenophora teres* et *Cochliobolus sativus),* le charbon nu *(Ustilago nuda)* et les fusarioses *(Microdochium nivale* et *Fusarium roseum) ;*
- l'orge, en ce qui concerne la lutte contre les maladies suivantes des parties aériennes de la plante : le piétin-verse *(Tapesia yallundae),* les helminthosporioses *(Pyrenophora teres* et *Cochliobolus sativus),* l'oïdium *(Erysiphe graminis forma specie hordei),* la rouille naine *(Puccinia hordei)* et la rhynchosporiose *(Rhynchosporium secalis*);
- la pomme de terre, en ce qui concerne la lutte contre les maladies du tubercule (notamment *Helminthosporium solani, Phoma tuberosa, Rhizoctonia solani, Fusarium solani),* le mildiou *(Phytophthora infestans)* et certaines viroses (virus Y);
- la pomme de terre en ce qui concerne la lutte contre les maladies du feuillage suivantes : l'alternariose *(Alternaria solani),* le mildiou *(Phytophthora infestans);*
- le coton, en ce qui concerne la lutte contre les maladies suivantes des jeunes plantes issues des semences : les fontes de semis et les nécroses du collet *(Rhizoctonia solani, Fusarium oxysporum),* la pourriture noire des racines *(Thielaviopsis basicola) ;*
- les cultures protéagineuses, par exemple le pois, en ce qui concerne la lutte contre les maladies suivantes des semences : l'anthracnose *(Ascochyta pisi, Mycosphaerella pinodes),* la fusariose *(Fusarium oxysporum),* la pourriture grise *(Botrytis cinerea),* le mildiou *(Peronospora pisi) ;*
- les cultures oléagineuses, par exemple le colza, en ce qui concerne la lutte contre les maladies suivantes des *semences : Phoma lingam, Alternaria brassicae* et *Sclerotinia sclerotiorum ;*
- le maïs, en ce qui concerne la lutte contre les maladies des semences : *(Rhizopus* sp., *Penicillium* sp., *Trichoderma* sp., *Aspergillus* sp. et *Gibberella fujikuroi) ;*
- le lin, en ce qui concerne la lutte contre la maladie des *semences : Alternaria linicola ;*
- les arbres forestiers, en ce qui concerne la lutte contre les fontes de semis *(Fusarium oxysporum, Rhizoctonia solani) ;*
- le riz en ce qui concerne la lutte contre les maladies suivantes des parties aériennes : la pyriculariose *(Magnaporthe grisea),* le rhizoctone *(Rhizoctonia solani) ;*
- les cultures légumières en ce qui concerne la lutte contre les maladies suivantes des semis ou des jeunes plants issus de semences : les fontes de semis et les nécroses du collet *(Fusarium oxysporum, Fusarium roseum, Rhizoctonia solani, Pythium. sp.);*
- les cultures légumières en ce qui concerne la lutte contre les maladies suivantes des parties aériennes : la pourriture grise (Botrytis sp.), les oïdiums (notamment *Erysiphe cichoracearum, Sphaerotheca fuliginea, Leveillula taurica),* les fusarioses *(Fusarium oxysporum, Fusarium roseum),* les cladosporioses *(Cladosporium sp.),* les alternarioses *(Alternaria sp.),* les anthracnoses *(Colletotrichum sp.),* les septorioses *(Septoria sp.),* le rhizoctone *(Rhizoctonia solani),* les mildious (par exemple *Bremia lactucae, Peronospora sp., Pseudoperonospora sp, Phytophthora sp) ;*
- les arbres fruitiers en ce qui concerne les maladies des parties aériennes : la moniliose *(Monilia fructigenae, M. laxa),* la tavelure *(Venturia inaequalis),* l'oïdium *(Podosphaera leucotricha*);
- la vigne en ce qui concerne les maladies du feuillage : notamment la pourriture grise *(Botrytis cinerea),* l'oïdium *(Uncinula necator),* le black-rot *(Guignardia biwelli),* le mildiou *(Plasmopara viticola);*
- la betterave en ce qui concerne les maladies suivantes des parties aériennes : la cercosporiose *(Cercospora beticola),* l'oïdium (*Erysiphe beticola),* la ramulariose *(Ramularia beticola).*

Parmi les végétaux préférentiellement choisis pour la mise en oeuvre de la méthode selon la présente invention, on peut citer les céréales ou le riz. Parmi les céréales, le blé est encore préféré.

Les exemples qui suivent sont mentionnés dans le but d'illustrer l'invention mais ne doivent en aucun cas être considérés comme limitatifs de celle-ci.

### Exemple 1

Cet exemple montre l'efficacité contre l'oïdium du blé (*Erysiphe graminis)* d'une composition selon la présente invention comprenant de l'azoxystrobin comme composé fongicide C.

Les essais suivants ont été menés en champs. La surface élémentaire de parcelle est de 5m².

Tous les essais ont été conduits en conditions de contamination naturelle.

Chaque essai comporte 4 répétitions et des parcelles témoins non traitées sont incluses dans le dispositif d'expérimentation afin de mesurer l'intensité des maladies.

Les résultats fournis proviennent de contrôles réalisés au champ par comptage des feuilles infestées (% des feuilles infestées) sur un échantillon de 25 feuilles. Les résultats des tests de variance sont issus d'un test Newmann et Keuls. Ce comptage a été effectué sur les feuilles F4, 14 jours après le premier traitement (T1)

Lors de ces tests, les produits testés ont été :
- Composé potentialisateur A : fosetyl-Al (1000 g/ha)
- Composé éliciteur B : Elexa^{™} (1000 g/ha) (auquel est ajouté un agent mouillant : le Triton R56)
- Composé fongicide C : azoxystrobin (250 g/ha)
- Composition A + B + C (4:4:1)

Les résultats obtenus lors de ces tests sont repris dans le *Tableau 1.* On remarque que lorsque l'azoxystrobin est utilisée seule pour traiter l'oïdium du blé, le pourcentage de feuille malade n'est réduit qu'à 74,5% (au lieu de 96,7% de feuilles malades sans traitement) ce qui est insuffisant pour protéger efficacement la culture contre ce pathogène. En revanche, utilisé en mélange avec le fosetyl-A1 et l'Elexa^{™} dont les activités respectives sont très faibles sur cette maladie (puisqu'il reste encore respectivement 93,3% et 90% de feuilles malades après traitement), on remarque alors, de façon tout à fait surprenante, que le pourcentage de feuilles malades n'est plus que de 6,7%.

**Tableau 1**

| Traitement | Feuilles malades (F4) T1+14jours (en %) |
|---|---|
| Non traité | 96,7 |
| Fosetyl A1- 1000 g/ha | 93,3 |
| Elexa+Triton - 2x1000 g/ha | 90,0 |
| Azoxystrobin - 250 g/ha | 74,5 |
| Fosetyl Al+(Elexa+Triton)+Azoxystrobin 1000+(2x1000)+250 g/ha | 6,7 |

### Exemple 2

Cet exemple montre l'efficacité contre la septoriose du blé *(Septoria tritici* également appelée *Mycosphaerella graminicola)* d'une composition selon la présente invention comprenant de l'azoxystrobin comme composé fongicide C.

Les essais suivants ont été menés en champs. La surface élémentaire de parcelle est de 5m².

Tous les essais ont été conduits en conditions de contamination naturelle.

Chaque essai comporte 4 répétitions et des parcelles témoins non traitées sont incluses dans le dispositif d'expérimentation afin d'évaluer l'intensité des maladies.

Les résultats obtenus proviennent de contrôles réalisés au champ par évaluation du pourcentage de la surface malade sur un échantillon de 25 feuilles. Les résultats des tests de variance sont issus d'un test Newmann et Keuls. Cette évaluation a été effectuée sur les feuilles F1, 19 jours après le second traitement (T2).

Lors de ces tests, les produits testés ont été :
- Composé potentialisateur A : fosetyl-Al (1000 g/ha)
- Composé éliciteur B : Elexa^{™} (1000 g/ha) (auquel est ajouté un agent mouillant : le Triton R56)
- Composé fongicide C : azoxystrobin (125 g/ha)
- Composition A + B + C (8 : 8 : 1)
- Composé de référence pour le traitement de *Septoria tritici :* Epoxyconazole + Kresoxim methyl (150 g/ha)

Dans ces conditions, le pourcentage de feuilles F1 malades après traitement par le composé de référence est de à 3,9%. On remarque que l'azoxystrobin utilisé seul pour traiter la septoriose du blé ne possède pas une efficacité comparable à celle du produit de référence utilisé pour traiter cette maladie puisque le pourcentage de feuilles malades après traitement dans des conditions identiques est supérieur de 27,6%. L'azoxystrobin utilisée seule est donc insuffisamment active pour protéger efficacement la culture contre ce pathogène. En revanche, utilisé en mélange avec le fosetyl-Al et l'Elexa^{™} dont l'activité est très faible sur cette maladie (93,3% de feuilles malades après traitement par l'un ou l'autre de ces produits), on remarque alors, de façon tout à fait surprenante, que le pourcentage de surface foliaire encore affectée par la septoriose après traitement dans des conditions identiques est supérieur de 6,4%, ce qui est comparable au résultat obtenu par le traitement de référence.

## Revendications

1. Composition fongicide comprenant au moins :
- un composé A potentialisateur choisi parmi l'acide phosphoreux, ses sels alcalins ou alcalino-terreux et ses dérivés ;
- un composé B éliciteur de la défense des plantes choisi dans la liste constituée des protéines, des oligosaccharides, des polysaccharides, des lipides, des glycolipides, des glycoprotéines, des peptides, des extraits de parois issus de matériel végétal et/ou de champignons, des champignons, de l'acibenzolar-S-methyl ou l'un de ses analogues, de l'acide 2,6-dichloroisonicotinique, de l'acide β-aminobutyrique, des extraits de levure, de l'acide salicylique ou l'un de ses esters, de l'acide jasmonique ou l'un de ses esters, d'un extrait d'algues ;
- un composé C fongicide choisi parmi la liste de composés comprenant les composés susceptibles d'inhiber le transport des électrons de la chaîne respiratoire de l'ubiquinol:ferricytochrome-c oxydoréductase mitochondrial des organismes fongiques phytopathogènes, les composés susceptibles d'inhiber la biosynthèse de l'ergostérol, les composés susceptibles d'inhiber la biosynthèse de la mélanine, les composés susceptible d'inhiber la biosynthèse de la méthionine et les composés susceptibles d'inhiber la germination des spores en agissant sur plusieurs voies métaboliques.

2. Composition selon la revendication 1, **caractérisée en ce que** le composé A est l'acide phosphoreux ou l'un de ses dérivés.

3. Composition selon la revendication 2, **caractérisée en ce que** le composé A est le fosetyl-A1 ou le fosetyl-Na.

4. Composition selon l'une quelconque des revendications 1 à 3, **caractérisée en ce que** le composé B est un polysaccharide.

5. Composition selon la revendication 4, **caractérisée en ce que** le composé B est l'Elexa^{™}.

6. Composition selon l'une quelconque des revendications 1 à 3, **caractérisée en ce que** le composé B est un oligosaccharide.

7. Composition selon la revendication 6, **caractérisée en ce que** le composé B est la laminarine.

8. Composition selon l'une quelconque des revendications 1 à 3, **caractérisée en ce que** le composé B est un extrait d'algues.

9. Composition selon la revendication 8, **caractérisée en ce que** le composé B est choisi parmi les produits β1-3(1-6)glucane, Agrocean, Agrimer 540 et Agrotonic.

10. Composition selon l'une quelconque des revendications 1 à 9, **caractérisée en ce que** le composé C est un composé susceptible d'inhiber le transport des électrons de la chaîne respiratoire de l'ubiquinol:ferricytochrome-c oxydoréductase mitochondrial des organismes fongiques phytopathogènes.

11. Composition selon la revendication 10, **caractérisée en ce que** le composé fongicide C est un composé appartenant à la famille des strobilurines, la fenamidone ou la famoxadone.

12. Composition selon la revendication 11, **caractérisée en ce que** le composé appartenant à la famille des strobilurines est l'azoxystrobin ou la fluoxastrobin.

13. Composition selon l'une quelconque des revendications 1 à 9, **caractérisée en ce que** le composé C est un composé susceptible d'inhiber la biosynthèse de l'ergostérol.

14. Composition selon la revendication 13, **caractérisée en ce que** le composé C est un composé appartenant à la famille des triazoles, à la famille des imidazoles ou la spiroxamine.

15. Composition selon l'une quelconque des revendications 1 à 9, **caractérisée en ce que** le composé C est un composé susceptible d'inhiber la biosynthèse de la mélanine.

16. Composition selon la revendication 15, **caractérisée en ce que** le composé C est la tricyclazole.

17. Composition selon l'une quelconque des revendications 1 à 9, **caractérisée en ce que** le composé C est un composé susceptible d'inhiber la biosynthèse de la méthionine.

18. Composition selon la revendication 17, **caractérisée en ce que** le composé C est le pyrimethanil.

19. Composition fongicide selon l'une quelconque des revendications 1 à 9, **caractérisée en ce que** le composé C est un composé susceptible d'inhiber la germination des spores en agissant sur plusieurs voies métaboliques.

20. Composition selon la revendication 19, **caractérisée en ce que** le composé C est un composé appartenant à la famille des phthalimides, le tolylfluanid ou la fenhexamid.

21. Composition selon la revendication 20, **caractérisée en ce que** le composé C appartenant à la famille des phthalimides est le captane, le folpel ou l'iprodione.

22. Méthode de traitement à titre préventif ou curatif contre les maladies phytopathogènes des plantes par un produit contenant une quantité efficace et non phytotoxique d'une composition selon l'une quelconque des revendications précédentes.

23. Méthode selon la revendication 22, **caractérisée en ce qu'**elle est utilisée pour traiter les céréales ou le riz.

## Claims

1. Fungicidal composition, comprising at least:
- one potentiating compound A chosen from phosphorous acid, alkali metal or alkaline earth metal salts thereof and derivatives thereof;
- one plant activating microbicidal compound B chosen from the list consisting of proteins, oligosaccharides, polysaccharides, lipids, glycolipids, glycoproteins, peptides, extracts of walls derived from plant material and/or from fungi, fungi, acibenzolar-S-methyl or an analogue thereof, 2,6-dichloroisonicotinic acid, β-aminobutyric acid, yeast extracts, salicylic acid or an ester thereof, jasmonic acid or an ester thereof, and an algal extract;
- one fungicidal compound C chosen from the list of compounds comprising compounds capable of inhibiting mitochondrial ubiquinol:ferricyto-chrome-c oxidoreductase respiratory chain electron transport in phytopathogenic fungal organisms, compounds capable of inhibiting ergosterol biosynthesis, compounds capable of inhibiting melanin biosynthesis, compounds capable of inhibiting methionine biosynthesis and compounds capable of inhibiting spore germination by acting on several metabolic pathways.

2. Composition according to Claim 1, **characterized in that** compound A is phosphorous acid or a salt thereof.

3. Composition according to Claim 2, **characterized in that** compound A is fosetyl-Al or fosetyl-Na.

4. Composition according to any one of Claims 1 to 3, **characterized in that** compound B is a polysaccharide.

5. Composition according to Claim 4, **characterized in that** compound B is Elexa^{™}.

6. Composition according to any one of Claims 1 to 3, **characterized in that** compound B is an oligosaccharide.

7. Composition according to Claim 6, **characterized in that** compound B is laminarin.

8. Composition according to any one of Claims 1 to 3, **characterized in that** compound B is an algal extract.

9. Composition according to Claim 8, **characterized in that** compound B is chosen from the products β1-3(1-6)glucan, Agrocean, Agrimer 540 and Agrotonic.

10. Composition according to any one of Claims 1 to 9, **characterized in that** compound C is a compound capable of inhibiting mitochondrial ubiquinol:ferricytochrome-c oxidoreductase respiratory chain electron transport in phytopathogenic fungal organisms.

11. Composition according to Claim 10, **characterized in that** the fungicidal compound C is a compound belonging to the strobilurin family, fenamidone or famoxadone.

12. Composition according to Claim 11, **characterized in that** the compound belonging to the strobilurin family is azoxystrobin or fluoxastrobin.

13. Composition according to any one of Claims 1 to 9, **characterized in that** compound C is a compound capable of inhibiting ergosterol biosynthesis.

14. Composition according to Claim 13, **characterized in that** compound C is a compound belonging to the triazole family or to the imidazole family, or spiroxamine.

15. Composition according to any one of Claims 1 to 9, **characterized in that** compound C is a compound capable of inhibiting melanin biosynthesis.

16. Composition according to Claim 15, **characterized in that** compound C is tricyclazole.

17. Composition according to any one of Claims 1 to 9, **characterized in that** compound C is a compound capable of inhibiting methionine biosynthesis.

18. Composition according to Claim 17, **characterized in that** compound C is pyrimethanil.

19. Fungicidal composition according to any one of Claims 1 to 9, **characterized in that** compound C is a compound capable of inhibiting spore germination by acting on several metabolic pathways.

20. Composition according to Claim 19, **characterized in that** compound C is a compound belonging to the phthalimide family, tolyfluanid or fenhexamid.

21. Composition according to Claim 20, **characterized in that** compound C belonging to the phthalimide family is captane, folpel or iprodione.

22. Method of treatment, in a preventive or curative capacity, against phytopathogenic diseases of plants using a product containing an effective and non-phytotoxic amount of a composition according to any one of the preceding claims.

23. Method according to Claim 22, **characterized in that** it is used for treating cereals or rice.

## Patentansprüche

1. Fungizide Zusammensetzung, die mindestens folgendes enthält:
- eine wirkungsverstärkende Verbindung A aus der Reihe Phosphorsäure, ihre Alkali- oder Erdalkalimetallsalze und ihre Derivate;
- eine Elicitorverbindung B für die pflanzliche Pathogenabwehr aus der Reihe Proteine, Oligosaccharide, Polysaccharide, Lipide, Glycolipide, Glycoproteine, Peptide, Zellwandextrakte aus pflanzlichem Material und/oder Pilzen, Pilze, Acibenzolar-S-methyl oder eines seiner Analoge, 2,6-Dichlorisonicotinsäure, β-Aminobuttersäure, Hefeextrakte, Salicylsäure oder einer ihrer Ester, Jasmonsäure oder einer ihrer Ester, Algenextrakt;
- eine fungizide Verbindung C aus der Verbindungsreihe der Verbindungen, die den Elektronentransport der Atmungskette der mitochondrialen Ubichinon-Ferricytochrom-c-Oxydoreduktase der phytopathogenen pilzlichen Organismen zu hemmen vermögen, Verbindungen, die die Ergosterolbiosynthese zu hemmen vermögen, Verbindungen, die die Melaninbiosynthese zu hemmen vermögen, Verbindungen, die die Methioninbiosynthese zu hemmen vermögen sowie Verbindungen, die **dadurch**, daß sie auf verschiedene Stoffwechselwege einwirken, die Sporenkeimung zu hemmen vermögen.

2. Zusammensetzung nach Anspruch 1, **dadurch gekennzeichnet, daß** es sich bei der Verbindung A um die phosphorige Säure oder eines ihrer Derivate handelt.

3. Zusammensetzung nach Anspruch 2, **dadurch gekennzeichnet, daß** es sich bei der Verbindung A um Fosetyl-A1 oder Fosetyl-Na handelt.

4. Zusammensetzung nach einem der Ansprüche 1 bis 3, **dadurch gekennzeichnet, daß** es sich bei der Verbindung B um ein Polysaccharid handelt.

5. Zusammensetzung nach Anspruch 4, **dadurch gekennzeichnet, daß** es sich bei der Verbindung B um Elexa^{™} handelt.

6. Zusammensetzung nach einem der Ansprüche 1 bis 3, **dadurch gekennzeichnet, daß** es sich bei der Verbindung B um ein Oligosaccharid handelt.

7. Zusammensetzung nach Anspruch 6, **dadurch gekennzeichnet, daß** es sich bei der Verbindung B um Laminarin handelt.

8. Zusammensetzung nach einem der Ansprüche 1 bis 3, **dadurch gekennzeichnet, daß** es sich bei der Verbindung B um einen Algenextrakt handelt.

9. Zusammensetzung nach Anspruch 8, **dadurch gekennzeichnet, daß** die Verbindung B aus der Reihe der Produkte β1-3(1-6)-Glucan, Agrocean, Agrimer 540 und Agrotonic stammt.

10. Zusammensetzung nach einem der Ansprüche 1 bis 9, **dadurch gekennzeichnet, daß** es sich bei der Verbindung C um eine Verbindung handelt, die den Elektronentransport der Atmungskette der mitochondrialen Ubichinon-Ferricytochrom-c-Oxydoreduktase der phytopathogenen pilzlichen Organismen zu hemmen vermag.

11. Zusammensetzung nach Anspruch 10, **dadurch gekennzeichnet, daß** es sich bei der fungiziden Verbindung C um eine Verbindung aus der Familie der Strobilurine, Fenamidon oder Famoxadon handelt.

12. Zusammensetzung nach Anspruch 11, **dadurch gekennzeichnet, daß** es sich bei der Verbindung aus der Familie der Strobilurine um Azoxystrobin oder Fluoxastrobin handelt.

13. Zusammensetzung nach einem der Ansprüche 1 bis 9, **dadurch gekennzeichnet, daß** es sich bei der Verbindung C um eine Verbindung handelt, die die Ergosterolbiosynthese zu hemmen vermag.

14. Zusammensetzung nach Anspruch 13, **dadurch gekennzeichnet, daß** es sich bei der Verbindung C um eine Verbindung aus der Familie der Triazole, der Familie der Imidazole oder Spiroxamin handelt.

15. Zusammensetzung nach einem der Ansprüche 1 bis 9, **dadurch gekennzeichnet, daß** es sich bei der Verbindung C um eine Verbindung handelt, die die Melaninbiosynthese zu hemmen vermag.

16. Zusammensetzung nach Anspruch 15, **dadurch gekennzeichnet, daß** es sich bei der Verbindung C um Tricyclazol handelt.

17. Zusammensetzung nach einem der Ansprüche 1 bis 9, **dadurch gekennzeichnet, daß** es sich bei der Verbindung C um eine Verbindung handelt, die die Methioninbiosynthese zu hemmen vermag.

18. Zusammensetzung nach Anspruch 17, **dadurch gekennzeichnet, daß** es sich bei der Verbindung C um Pyrimethanil handelt.

19. Zusammensetzung nach einem der Ansprüche 1 bis 9, **dadurch gekennzeichnet, daß** es sich bei der Verbindung C um eine Verbindung handelt, die **dadurch**, daß sie auf verschiedene Stoffwechselwege einwirkt, die Sporenkeimung zu hemmen vermag.

20. Zusammensetzung nach Anspruch 19, **dadurch gekennzeichnet, daß** es sich bei der Verbindung C um eine Verbindung aus der Familie der Phthalimide, Tolylfluanid oder Fenhexamid handelt.

21. Zusammensetzung nach Anspruch 20, **dadurch gekennzeichnet, daß** es sich bei der Verbindung C aus der Familie der Phthalimide um Captan, Folpet oder Iprodion handelt.

22. Verfahren für die präventive oder kurative Behandlung gegen phytopathogene Pflanzenkrankheiten unter Verwendung eines Produkts, das eine wirksame, nichtphytotoxische Menge einer Zusammensetzung nach einem der vorhergehenden Ansprüche enthält.

23. Verfahren nach Anspruch 22, **dadurch gekennzeichnet, daß** es für die Behandlung von Getreide oder Reis verwendet wird.
